# EUROPEAN PATENT APPLICATION

(11) **EP 4 095 628 A1**
(43) Date of publication of application: **30.11.2022**
(21) Application number: 21175687.9
(22) Date of filing: 25.05.2021
(51) Int. Cl.: G05B 19/00, G06F 11/07

(54) **METHOD AND SYSTEM FOR CONTROLLING A MACHINE BY EXECUTING PROGRAM STEPS WHICH VERIFIABLY EXECUTE PREDEFINED CONTROL TASKS**

(71) Applicant: Siemens Aktiengesellschaft, 80333 München (DE)
(72) Inventor: Geipel, Markus Michael, 80799 München (DE); Bogdoll, Dieter, 80634 München (DE); Kehrer, Johannes, 81829 München (DE); Reitinger, Axel, 81377 München (DE); Strixner, Ferdinand, 81739 München (DE)

(57) **Abstract**

Computer-implemented method and control apparatus for controlling a machine (30) by executing program steps which verifiably execute predefined control tasks, comprising
- manipulating (S1) data based on input data received from the machine (30) and resulting in reference data by data programming steps structured according to a declarative programming paradigm in a data processing unit (27), and
- performing (S2) control program steps verifying the reference data with respect to explicit conditions, without any further manipulation of the reference data in the control program steps in a control processing unit (25), and
- providing (S3) instructions resulting from the performed control program steps to the machine (30) for execution of the instructions by the machine (30).

## Description

The present disclosure relates to a control apparatus and a computer implemented method for controlling a machine, e.g., in an industrial automation system and an assistant apparatus configured to perform the method.

In various technical fields, there is a need to control a machine or a system of machines. For example, in the industrial automation context autonomous machines gain more and more of importance. Machines, and even more autonomous machines, can easily cause severe physical damage to people and goods. At the same time, modular and in particular autonomous machines are hard to program and to coordinate. Similar risks apply to the programming of medical software and devices. Guaranteeing safe operation is therefore a top priority in this field and significant time and effort is invested.

For programmable controllers, e.g., programmable logic controller PLC in an industrial automation system, programming languages of the IEC 61136 standard follow the imperative programming paradigm. They define the behavior of a concrete machine as a rigid sequence with explicit decision points. In the case of function block diagrams, a logical circuit is emulated.

For a control program controlling a machine, a common technique to ensure safety is formal verification. The idea is to prove that certain conditions cannot occur in the program. Formal verification is hard and tedious. It is only possible for relatively small programs and normally only done for parts of the code that are highly critical. Complementary to this approach based on formal logic, an empirical approach can be taken. In this approach test cases are written. Test cases are programs which probe functionality of the control program and check if the reaction of the program is in line with the specification. Test cases only test the situations and conditions they were written for. There are no guarantees, and it remains uncertain whether all relevant situations and conditions which cause a safety problem are covered.

In safety critical technical products, e.g., automotive industry a basic functional safety standard (ISO IEC61508) is applied to proof the product safety. The required safety level is ensured by using the operating hours of all products in the field and the impact evaluation of the incident. This is an approach to avoid the direct profess of error free implementation.

Yet another complementary approach is to add checks to the control program in form of assertations which are part of normal operation. In different critical positions in the code the assumptions of the programmer are explicitly checked with so called assert statements. Program execution will be stopped upon a violation of an assertation.

While having their merit, all of these techniques require explicit extra effort and if not applied and maintained thoroughly, pretend a false sense of safety.

It is the object of the present disclosure to improve the verifiability of safety aspects in the programming of a controller of a machine. Especially, it is an object to improve control engineering to make rules/guarantees explicitly visible and provable.

These objects are addressed by the subject matter of the independent claims. Advantageous embodiments are proposed in the dependent claims.

According to a first aspect, a computer-implemented method for controlling a machine by executing program steps is proposed, which verifiably execute predefined control tasks, comprising
- manipulating data based on input data received from the machine and resulting in reference data by data programming steps structured according to a declarative programming paradigm in a data processing unit, and
- performing control program steps verifying the reference data with respect to explicit conditions, without any further manipulation of the reference data in the control program steps in a control processing unit, and
- providing instructions resulting from the performed control program steps to the machine for execution of the instructions by the machine.

Manipulating data comprises any modification of data by applying algebraic functions, logical or Boolean valued functions and further to data. Input data from the machine are, e.g., sensor data provided by a sensor of the machine or a component of the machine, data derived from at least one sensor data structured as a number, a string, and further. Data programming steps are data manipulation steps performed by operations structured according to a computer programming language or paradigm.

Declarative programming is a programming paradigm, a style of building the structure and elements of computer programs, that expresses the logic of a computation without describing its control flow. Many languages that apply this style attempt to minimize or eliminate side effects by describing what the program must accomplish in terms of the problem domain, rather than describe how to accomplish it as a sequence of the programming language primitives. The how being left up to the language's implementation. This is in contrast with imperative programming, which implements algorithms in explicit steps. One example of a declarative programming is programming language "Prolog".

Conditions, also named guarantees in this document, are simple, explicitly stated rules applied to reference data. The rule is continuously monitored by the control processing unit. Any violation of the rule results in a specified action, e.g., stops a movement of the machine.

The machine is any kind of machine comprising one or several components wherein at least on components is controlled according to the method. The machine is part of an industrial automation system, like a production or process plant, a transportation or distribution system, a building control system or a medical system.

Separating the control programming steps from data programming steps structured according to declarative programming paradigm enables providing guarantees, i.e, conditions or rules, in the control programming steps which are explicit, verifiable and automatically enforced by the method resulting in higher safety, less effort for engineers and better maintainability.

According to an embodiment of the invention, the control program steps are performed by a control programming language without comprising any data manipulation functionality.

Applying a control programming language without comprising any data manipulation functionality provides a clear structure focusing explicitly on control functions. The data processing steps which often build a major part of the programming steps obfuscate the essential control functions. The main reason why verification of existing control programming is difficult is that data processing, i.e., calculation the manipulation of variables, and machine control, i.e., managing sensor input and controlling actuators, is mixed.

According to an embodiment of the invention, the control programming language is structured according to a finite state machine, a workflow diagram or a behavior tree.

Control functions performed by the control unit are provided by control program steps of a control software program which is structured according to a control software programming language. The control program can be formulated with different paradigms as long as they do only allow control logic and not data manipulation. Finite state machine, a workflow diagram or a behavior tree describe a dedicated states or tasks and transitions between the states, tasks. They fulfil the requirements of providing control functions without including any data processing.

According to an embodiment of the invention, the reference data is re-processed based on updated input data received in the data processing unit from the machine according to reactive program steps and the re-processed reference data is provided from the data processing unit to the control processing unit.

Reactive programming is a declarative programming paradigm concerned with data streams and the propagation of change. With this paradigm it is possible to express static or dynamic data streams with ease, and also communicate that an inferred dependency within the associated execution model exists, which facilitates the automatic propagation of the changed data flow.

According to an embodiment of the invention, data between the data processing unit and the control processing unit are transferred only indirectly via a data storage unit.

This ensures separation of data processing and control processing also on data level. Further the data storage unit can actively support the data processing unit during data processing.

According to an embodiment of the invention, input data from the machine is received only in the data storage unit.

This ensures separation of data processing and control processing also on data level.

According to an embodiment of the invention, data program steps are structured according to logical programming.

A second aspect concerns a control apparatus for controlling a machine by executing program steps which verifiably execute predefined control tasks, having a control architecture comprising
- a data processing unit configured to manipulate data based on input data received from the machine and resulting in reference data by data program steps structured according to a declarative programming paradigm, and
- a control processing unit configured to perform control program steps verifying the reference data with respect to explicitly stated conditions, without any further manipulation of the reference data in the control processing unit and providing instructions resulting from the performed control program steps to the machine for execution of instructions by the machine.

The data processing unit and the control processing unit are preferably implemented on different hardware units, e.g., processors. Separating of the manipulation of data from control tasks simplifies the structure of the overall control program. In declarative programming paradigm programming data processing steps are formulated by defining facts and rules which are inferred from input data. Program steps are structured according to a programming paradigm. A program language structured and operating according to the declarative programming paradigm is, e.g., the program language "Prolog".

According to an embodiment of the invention, the control apparatus further comprises a data storage unit configured to reactively transfer data between the data processing unit and the control processing unit.

The data storage unit supports the exchange of facts from the data processing unit to the control processing unit. The data storage unit is configured according to reactive programming to support this exchange. The data storage unit provides a physical separation of the data processing unit and control processing unit

According to an embodiment of the invention, the control apparatus further comprises a data programming interface configured to input data rules according to the declarative program paradigm to the data processing unit.

The data programming interface provides an editor to input data rules according to the declarative programming paradigm into the data processing units.

According to an embodiment of the invention, the data processing unit comprises an inference engine.

Declarative data processing is performed by inference applying artificial intelligence in an inference engine in the control apparatus. The inference engine is a component of the control apparatus that applies logical rules to a knowledge base provided by the data storage unit to deduce new information.

According to an embodiment of the invention, the control apparatus further comprises a graphical control programming interface configured to input explicit guarantees according to the control program steps to the control processing unit.

According to an embodiment of the invention, the control processing unit comprises an interpreter for interpreting the data program steps structured according to a finite state machine, a workflow diagram or a behavior tree.

The graphical control programming interface provides a graphical editor which facilitates input of programming steps, i.e., components of a finite state machine, a workflow diagram or a behavior tree.

A third aspect concerns a computer program product directly loadable into the internal memory of a digital computer, comprising software code portions for performing the steps of above disclosed method when said product is run on said digital computer.

In the following, embodiments of the present disclosure will be described in more detail and with reference to the accompanying drawings.
- Fig. 1: schematically illustrates a machine controlled by a controller apparatus in an automation environment.
- Fig. 2: illustrates an embodiment of the inventive computer-implemented method by a flow diagram.
- Fig. 3: schematically illustrates an embodiment of a function split between data processing and control processing of a control task of the inventive method and controller apparatus.
- Fig. 4: schematically illustrates an embodiment of the control architecture of an inventive controller apparatus.
- Fig. 5A-C: schematically illustrates an embodiment of a control processing of a control task structured according to a behavior tree with an explicit condition.

It is noted that in the following detailed description of embodiments the accompanying drawings are only schematic and that the illustrated elements are not necessarily shown to scale. Rather, the drawings are intended to illustrate functions and cooperation of components. Here, it is to be understood that any connection or coupling of functional blocks, devices, components, or other physical or functional elements could also be implemented by an indirect connection or coupling, e.g., via one or more intermediate elements. A connection or coupling of elements or components can for example be implemented by a wire-based, a wireless connection, and/or a combination of a wire-based and a wireless connection. Functional blocks can be implemented by dedicated hardware, by firmware and/or software installed on programmable hardware, and/or by a combination of dedicated hardware and firmware or software.

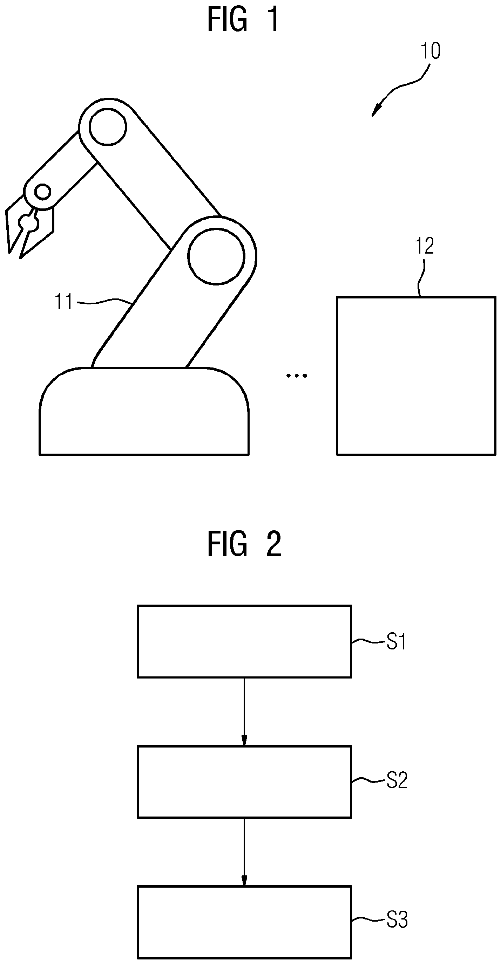

Fig. 1 schematically illustrates a machine 11, controlled by a control apparatus 12 in an application environment 10. The machine can be e.g., a robot arm in an industrial automation plant, or a medical device in a hospital. The machine 11 is controlled by the control apparatus 12 which is integrated into the machine 11 or implemented as a separate unit. The machine 11 performs tasks controlled by the control apparatus 12. The machine not only performs a task but also receives input data from the machine 11 and provides instructions to the machine based on the received input data. In safety critical technical environments like industrial automation plants with increasing autonomously moving machines or medical environment, safe operation of the machine 12 is essential. Therefore, the control apparatus 12 is configured to control the machine 11 by executing program steps which verifiably execute the predefined control tasks. Data program steps cause the control apparatus 12 to perform data processing steps, wherein control program steps cause the control apparatus 12 to perform by control processing steps.

The disclosed computer-implemented method does not aim to add verification and tests to existing control programming but instead proposes a new control architecture which addresses verifiability directly. Main idea of this approach is thus separating the control program from the data processing.

Fig. 2 illustrates the steps of the method. In a first step S1, manipulation of data based on input data received from the machine and resulting in reference data is performed by data programming steps structured according to a declarative programming paradigm in a data processing unit.

The vast majority of data processing systems use a procedural-based, i.e. imperative programming paradigm. This is exemplified by programming languages like C, Java or Python, where execution is controlled by "procedures" consisting of sequences of statements (assignments, loops, if, etc.). A programmer of such a system is responsible for specifying, in great detail, what this sequence is, and making sure that it is correct. The sequential nature of such systems, and the resulting exponentially large number of execution paths that a system of even moderate size can take, is the fundamental basis for their complexity. It is also the source of most of the very large number of bugs that typically plague such systems.

Declarative Rule-based programming is a fundamentally different programming paradigm. It is characterized by the lack of any sequential statements, and any notion of state of which the programmer has to be aware. Instead, processing is specified in the form of logical rules, where each rule relates one or more output variables to a set of input variables. Such rules can be "chained" together so that the output of one rule becomes an input to other rules. An important characteristic of such a system is that the rules always hold. In other words, the values of the variables are always such that they are consistent with the rules. For example, if a rule states a relation between variables like z=x+y, then the values of x, y, and z are constrained to be such that this relation is never violated. This implies that changes to input variables, i.e., x or y in this example, must be propagated "instantly" so that the corresponding output variables are updated according to the relation. For example, if x=1, y=2, and z=3, and then x is changed to 2, then z must be updated to 4. In this case, "instantly" means that the update happens before any user, or any processing element outside the declarative programming system, notices an inconsistency. The primary advantage of a declarative role-based system is that it allows the programmer to focus on the required behavior of the application by specifying (declaring) invariant logical and arithmetic relations between variables. The complexity related to sequencing and state is hidden from the programmer.

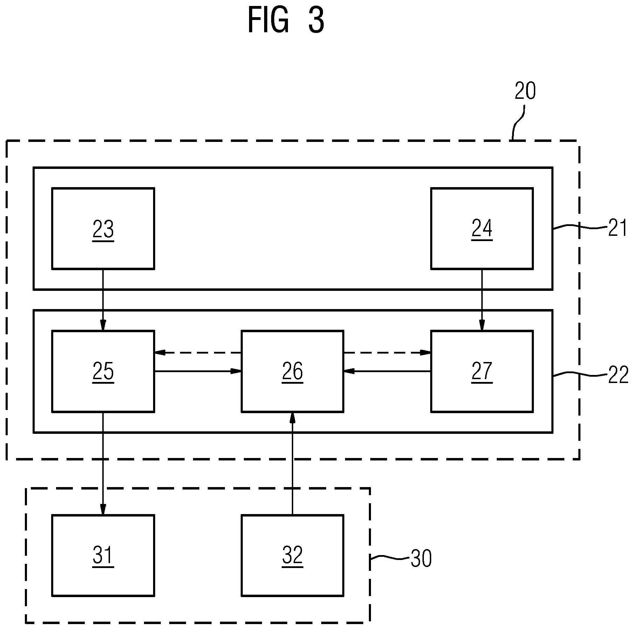

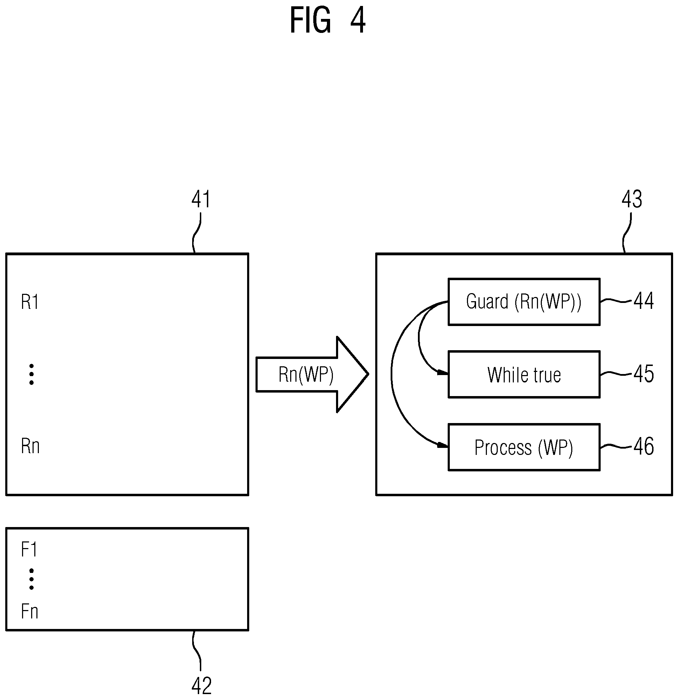

In step S2 control program steps verifying the reference data with respect to explicit conditions are performed without any further manipulation of the reference data in the control program steps in a control processing unit. The control program steps can be formulated with different paradigms as long as they do only allow control logic but no data manipulation. Examples program paradigms may be Finite State Machines, workflow diagrams or behavior trees. In the embodiments illustrated in Fig.3 and 4 behavior trees is used for control processing, declarative programming such as in logic programming, e.g., Prolog is used for data processing steps, but do not exclude the other variants.

Behavior tree is a powerful programming paradigm to overcome the limitations of classical PLC programming approaches. A behavior tree describes switchings between a finite set of tasks in a modular fashion. Their strength results from their ability to create very complex tasks composed of simple tasks, without worrying how the simple tasks are implemented. A task describes single behavior steps, several tasks are combined into compositions defining in which order and under which condition the single tasks shall be executed. Behavior trees present some similarities to hierarchical state machines with the key difference that the main building block of a behavior is a task rather than a state. Its ease of human understanding make behavior trees less error prone. The expression behavior tree and behavior tree program are used as synonyms throughout this document.

In step S3 instructions resulting from the performed control program steps are provided to the machine for execution of the instructions by the machine.

The reference data is re-processed based on updated input data received in the data processing unit from the machine according to reactive programming steps and the re-processed reference data is provided from the data processing unit to the control processing unit. Preferably, data is only indirectly transferred via a data storage unit between the data processing unit and the control processing unit. Input data from the machine 11 is received only in the data storage unit.

Fig. 3 schematically illustrates a control apparatus 30 for controlling a machine 30 by executing program steps which verifiably execute predefined control tasks. The control apparatus 20 is configured to execute the method steps as described above. The control apparatus 20 is connected to or integrated into the machine 30 and controls the operation of machine 30. The control apparatus 20 transmits control commands to at least one actuator 31 of the machine. The actuator 31 performs actions according to the commands. The machine 30 comprises at least one sensor 32 which acquires values of parameters of the machine or related to the machine or from the environment of the machine.

The control apparatus 20 comprises a control architecture 22 consisting of a data processing unit 27, a control processing unit 25 and a data storage unit 26. The control apparatus 20 further comprises an engineering architecture 21 comprising a graphical control programming interface 23 configured to input explicit guarantees according to the control program steps to the control processing unit 25. The engineering architecture 21 further comprises a data programming interface 24 configured to enter data rules according to the declarative program paradigm to the data processing unit 27.

The data processing unit 27 is configured to manipulate data based on input data received from the machine 30, especially based on sensor data sampled by the sensor 32 resulting in reference data. The data processing unit 27 processes the input data by data program steps structured according to a declarative programming paradigm resulting. The data processing unit 27 is configured as an inference engine, which applies logical rules to a knowledge base including the input data provided by the data storage unit 26 to deduce new information. The

The control apparatus 20 comprises a control processing unit 27 configured to perform control program steps verifying the reference data with respect to explicit conditions, without any further manipulation of the reference data in the control processing unit 25 and providing instructions resulting from the performed control program steps to the machine for execution of instructions by the machine. The control processing unit 25 comprises a control program interpreter which proves the reference data depending on the control program steps. The control processing unit 25 especially verifies guarantees provided, e.g., by "guard" statements in the control program steps encoded according to a behavior tree, finite state machine or workflow diagram.

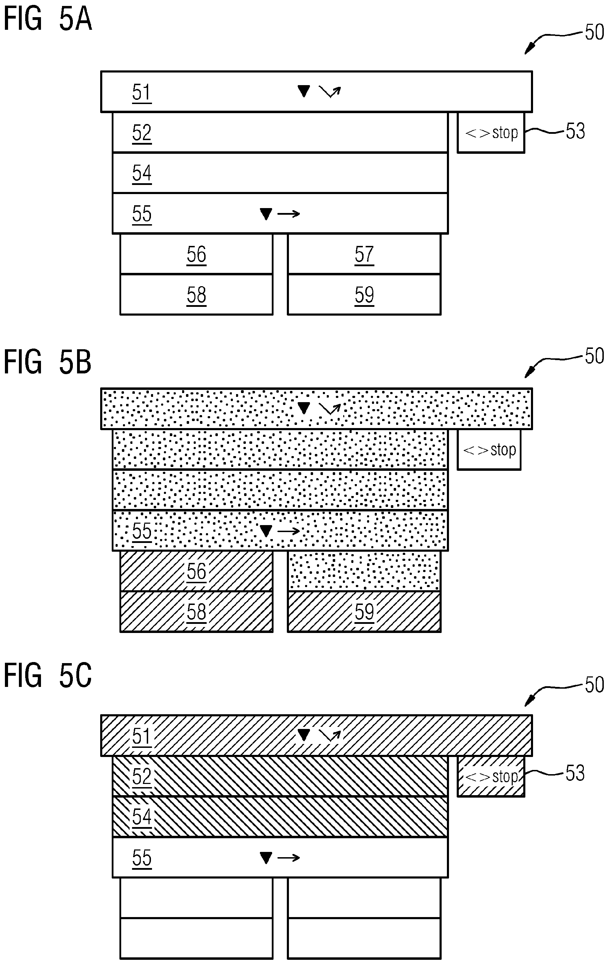

Data processing unit 27 is connected to the control processing unit by the data storage unit 26 which is operating in a reactive way. The data storage unit 26 notifies both, data processing unit 27 and control processing unit 25 upon data changes, see dotted arrow. Data refers here to input data as well as reference data. Sensors 31 write only to the data storage unit 26. Only the control language interpreter of control processing unit 25 has access to the actuators 31. Relating to example shown in Fig. 5, the data used in the definition of machineInSafeMode might change while the guarded part of the control code is executed. Therefore, the inference engine of the data processing unit 27 needs to react to input data changes. If input data, for instance coming from a sensor changes, the inference engine needs to redo all proofs involving this piece of data.

Fig. 4 shows an embodiment of function split between data processing and control processing of a control task. It shows data program steps, see section 41, defining facts F1, .., Fm and rules R1, .., Rn according to the declarative programming paradigm. Facts are provided by the input data, e.g., sampled by sensors in the machine 11. Definitions of the facts, comprising definition of data types are shown in section 42. In the following examples data program steps R1, ..., Rn are shown according to the programming language Prolog:
% type1 workpieces consist of wood and iron
   **material (type (t1), [stone, iron]). (R1)**
% type1 workpieces consist of paper and stone
   **material (type (t2), [paper, stone]).** (R2)
% iron and stone are heat resistant
   **heatResistant(iron)**.
   **heatResistant(stone). (R3)**
% a workpiece consists of the materials corresponding to its type
   **material(piece(WP), L) :- material (type(T), L),**
   **of Type (piece (WP), type(T)). (R4)**
% an empty material list is heat resistant
   **heatResistant([]). (R5)**
% a list of metrials is heatresistant when the first material is resistant and the rest is as well
   **heatResistant([H|T]) :- heatResistant(H), heatResistant(T)**. **(R6)**
% a workpiece is heat resistant if its materials are
   **heatResistant(piece(WP)) :- material (piece (WP), L), heatResistant(L)**. **(R7)**
% a workpiece with a height smaller than 10 is compatible
   **heightCompatible(piece(WP))** :- **height (piece (WP), H), H < 10. (R8)**
% a workpiece with a height smaller than 10 is compatible **compatibleWorkpiece**(piece(WP)) :- heatResistant(piece(WP)), heightCompatible(piece(WP)). **(R9)**

Related Facts of section 42 are defined by:
**ofType(piece(currentPiece), type(tl)). (F1)**
**height(piece(currentPiece), 8). (F2)**

An exemplary related control program step is shown in section 43. It provides an explicit condition comprising a "Guard" decorator 44 monitoring the rule Rn defined by the data program step in section 41. Related to above rules the explicit condition is coded by
**"Guard (compatibleWorkpiece(currentWorkpiece))"**

It guarantees the guard condition for the tree below comprising a "while" decorator 45 and a process 46. The process WP, see 46, is performed as long as the condition Rn(WP) of the process WP is true. The derivation of the Guard condition Rn(WP) is performed by a logical proof. Guard statements in the control program code are easy to read.

In comparison, the same control task encoded in an imperative programming paradigm, e.g., Python is stated in the following:

```
 material_dict = {'t1': ['wood', 'iron']),
                  't2': ['paper', 'iron', 'stone'])}
  
                  heatResistant_set = {'wood', 'iron', 'stone'}
  
 def isHeatResistantMaterial(material):
    return material in heatResistant_set
  
 def isHeatResistantPiece(piece_type):
    if not piece_type:
        return False
    for material in material_dict[piece_type]:
        if not isHeatResistantMaterial(material):
            return False
    return True
  
 def isHeightCompatible(piece_height):
    return piece_height < 10
  
 def isCompatibleWorkpiece(workpiece):
    re-
 turn isHeatResistantPiece(workpiece.type) and isHeightCompati
 ble(workpiece.height)
 currentWorkpiece = {}
 while True:
    currentWorkpiece.height = readHeightSensor()
    currentWorkpiece.type = readTypeSensor()
    if isCompatibleWorkpiece(currentWorkpiece):
        processWorkpiece(currentWorkpiece)
```

Behavior and information processing are mixed. A correct machine behavior is hard to prove.

A further example of control processing encoded by control program steps are explained in more details. The control program steps are encoded by behavior tree notation and shown in Fig. 5A to Fig. 5C.

The general concept behind behavior tree programming is a mathematical model of plan execution used in computer science, robotics, control systems and video games. They describe switchings between a finite set of tasks in a modular fashion. Their strength comes from their ability to create very complex tasks composed of simple tasks, without worrying how the simple tasks are implemented. Behavior trees present some similarities to hierarchical state machines with the key difference that the main building block of a behavior is a task rather than a state. Its case of human understanding make behavior trees less error prone and very popular in the game developer community. Behavior trees have been shown to generalize several other control architectures.

The behavior tree is graphically represented as a directed tree consisting of nodes, which are classified as root, control flow nodes, or execution nodes, also called tasks. For each pair of connected nodes, the outgoing node is called parent and the incoming node is called child. The root has no parents and exactly one child, the control flow nodes have one parent and at least one child, and the execution nodes have one parent and no children. Graphically, the children of a control flow node are placed below it, ordered from left to right. The execution of the behavior tree starts from the root which sends ticks with a certain frequency to its child. A tick is an enabling signal that allows the execution of a child. When the execution of a node in the behavior tree is allowed, it returns to the parent a status running if its execution has not finished yet, success if it has achieved its goal, or failure otherwise.

The control flow node is used to control the subtasks of which it is composed. A control flow node may be either a "fallback" node or a "sequence" node. They run each of their subtasks in turn. When the subtask is completed and returns its status, i.e., success or failure, the control flow node decides whether to execute the next subtask or not. "Fallback" nodes are used to find and execute the first child that does not fail. A fallback node will return immediately with a status code of success or running when one of its children returns success or running. The children are ticked in order of importance, from left to right. "Sequence" nodes are used to find and execute the first child that has not yet succeeded. The sequence node will return immediately with a status code of failure or running when one of its children returns failure or. The children are ticked in order, from left to right.

An explicit guarantee in a sub-task can be implemented by a "guard" statement which states an explicit condition with respect to the child node and subsequent subtree of the "guard" statement. The complete subtask is executed only if the explicit guarantee, here the "guard" node is proved to be "true".

Behavior tree 50 in Fig. 5A encodes a control processing for a sequence of movements commands which is guarded by the statement "button_0 = false". This means that this sequence is only ever executed if and as long as button_0 = false holds, i.e., is proved to be true.
The control processing unit 25 of the control apparatus 20, see Fig. 3, interprets the behavior tree 50 comprising behavior tree nodes 51-59 and instructs the machine 30 to execute the movements respectively. Nodes 51, 52, 54-57 are control flow node, nodes 53, 58, 59 are execution nodes, i.e., tasks. Node 51 is a "fallback" composite, indicating that its subtree comprising nodes 52, 54-59 is executed as long as the child node 52 is proved to be true. The statement of node 52 is "While true". If the child node 52 returns the value "false", task 53 is performed, e.g., the movement is stopped.

The control of the movement comprises an explicit guarantee provided by node 54 comprising a "guard" statement which is coded, e.g., "guard button_0 = false". This guard statement verifies the parameter "button_0" has the value "false". As long the parameter "button_0" is of value "false" the "guard" statement is true and the subtree nodes "guard" statement comprising nodes 55-59 are executed, i.e., the movement of the machine continues. If the value of "button_0" is proved to be true, the "guard" statement "button_0 = false" is "false". Subsequently the node 52 stating "while true" is proved to be false and the "fallback" statement of node 52 switches to node 53 stating "<>stop", which stops the movement.

The subtree built by node 55-59 controls the movement of the machine by node 55 indicating a "sequence" composite, indicated by a "triangle and arrow" symbol. The Sequence node is used to find and execute the first child, here node 56 or node 57 that has not yet succeeded. Node 56 indicates "wait for sensor_0 = true" and node 58 indicates "<> go right". That means if node 56 is true the machine moves to the righthand side. Node 57 indicates "wait for sensor_1 = true" and node 59 indicates "<> go left". That means if node 57 is true the machine moves to the left-hand side.

Fig. 5B shows normal operation. The "sequence" composite, see node 55, is executed in a loop. Dotted nodes 51-55 and 57 are active while hatched nodes 56, 58, 59 are just executed successfully.

Fig. 5C shows the behavior tree 50 when the "guard" statement is violated. If at any point in time the "guard" statement, see node 54, is violated, the execution of the node 55 "sequence" statement is cancelled, the loop, see node 52 coded by "while true", is exited and the behavior tree 50 executes the "stop", see node 53, ruled by "fallback" statement, see node 51. The "guard" statement, node 54, makes the guarantee "button_0 = false" and its scope explicit. Fig. 5C shows the active node 51 and node 53 as hatched nodes.

Conditions are not always as simple as "button_0 = false", see node 54. In many cases they need to be calculated. This calculation must not be mixed with the control language and the control processing respectively. Therefore, a separate data processor is used for control processing in the control apparatus 30. In this example we will use a declarative language with Prolog Syntax and assume to have an inference engine processing the Prolog.

As an example, a subtree is guarded with a Guard statement "Guard machineInSafeMode=true". It has to be defined what machineInSafeMode means. The following declaration does exactly this:

```
 machineInSafeMode := NOT (safetydoor(X) AND open(X)) AND NOT
 (lightbarrier(Y) AND interrupted(Y))
```

A machine is in SafeMode, if there is no open door which is a safety-door, and no lightbarrier that is interrupted. The data processing unit 22 configured to provide an inference engine needs to prove this in order to satisfy the guard statement.

The disclosure presented here does not try to solve the problem of verifiability separately from control engineering but proposes a way of control engineering which makes guarantees explicitly visible and provable. This is achieved by firstly separating data processing and control, secondly making control code visual, and finally making data processing declarative and reactive.

It is to be understood that the above description of examples is intended to be illustrative and that the illustrated concepts are susceptible to various modifications. For example, the illustrated concepts could be applied to monitoring various types of machine or machine systems and various types of data which can be monitored on a machine or machine system, and the refined label information may be utilized in various ways.

## Claims

1. Computer-implemented method for controlling a machine (30) by executing program steps which verifiably execute predefined control tasks, comprising
- manipulating (S1) data based on input data received from the machine (30) and resulting in reference data by data programming steps structured according to a declarative programming paradigm in a data processing unit (27), and
- performing (S2) control program steps verifying the reference data with respect to explicit conditions, without any further manipulation of the reference data in the control program steps in a control processing unit (25), and
- providing (S3) instructions resulting from the performed control program steps to the machine (30) for execution of the instructions by the machine (30).

2. Computer-implemented method according to claim 1, wherein control program steps are performed by a control programming paradigm without comprising any data manipulation functionality.

3. Computer-implemented method according to claim 2, wherein the control programming language is structured according to a finite state machine, a workflow diagram or a behavior tree.

4. Computer-implemented method according to any of the preceding claims, wherein the reference data is re-processed based on updated input data received in the data processing unit (27) from the machine (30) according to reactive programming steps and the re-processed reference data is provided from the data processing unit (27) to the control processing unit (25).

5. Computer-implemented method according to any of the preceding claims, wherein transferring data between the data processing unit (27) and the control processing unit (25) only indirectly via a data storage unit (26).

6. Computer-implemented method according to claim 5, wherein input data from the machine (30) is received only in the data storage unit (26).

7. Computer-implemented method according to any of the preceding claims, wherein data program steps are structured according to logical programming.

8. Control apparatus for controlling a machine (30) by executing program steps which verifiably execute predefined control tasks comprising
- a data processing unit (27) configured to manipulate data based on input data received from the machine (30) and resulting in reference data by data program steps structured according to a declarative programming paradigm, and
- a control processing unit (25) configured to perform control program steps verifying the reference data with respect to explicit conditions, without any further manipulation of the reference data in the control processing unit (25) and providing instructions resulting from the performed control program steps to the machine (30) for execution of instructions by the machine (30).

9. Control apparatus according to claim 8, further comprising a data storage unit (26) configured to reactively transfer data between the data processing unit (27) and the control processing unit (25).

10. Control apparatus according to any of claims 8-9, comprising a data programming interface (24) configured to input data rules according to the declarative program paradigm to the data processing unit (27).

11. Control apparatus according to any of claims 8-10, wherein the data processing unit (27) comprises an inference engine.

12. Control apparatus according to any of claims 8-11, comprising a graphical control programming interface (23) configured to input explicit guarantees according to the control program steps to the control processing unit (25).

13. Control apparatus according to any of claims 8-12, wherein the control processing unit (25) comprises an interpreter for interpreting the data program steps structured according to a finite state machine, a workflow diagram or a behavior tree.

14. A computer program product directly loadable into the internal memory of a digital computer, comprising software code portions for performing the steps of claim 1 to 7 when said product is run on said digital computer.
